(19) Europäisches Patentamt
European Patent Office
Office européen des brevets

(11) **EP 2 963 437 A1**

(12) **EUROPEAN PATENT APPLICATION**

(43) Date of publication:
**06.01.2016 Bulletin 2016/01**

(51) Int Cl.:
**G01S 5/00** (2006.01) **G01S 19/09** (2010.01)
**G01S 19/34** (2010.01)

(21) Application number: **14306044.0**

(22) Date of filing: **30.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Vanderhulst, Geert**
  **2018 Antwerpen (BE)**
• **Kawsar, Fahim**
  **2018 Antwerpen (BE)**

(74) Representative: **D'Halleweyn, Nele Veerle Trees Gertrudis**
**Arnold & Siedsma**
**Bezuidenhoutseweg 57**
**2594 AC The Hague (NL)**

(54) **Cell-assisted GNSS**

(57) A method for determining a position of a Global Navigation Satellite System (GNSS)-enabled mobile device connected to a GNSS-enable station device via a cellular network connection, said method comprising the following steps performed at said GNSS-enabled station device: receiving from said mobile device via said cellular network connection a position calculation request including pseudorange information pertaining to a number of mobile device pseudoranges between said mobile device and a respective plurality of GNSS satellites; determining error correction information configured for correcting a position calculation error for a position calculated based on station device pseudoranges between said station device and at least said respective plurality of GNSS satellites; calculating a position of said mobile device based on said pseudorange information and on said error correction information; and sending said position of said mobile device to said mobile device via said cellular network connection.

FIG. 1

## Description

Field of Invention

The field of the invention relates to Global Navigation Satellite Systems (GNSS). Particular embodiments relate to a GNSS-enabled station device, a GNSS-enabled mobile device, methods for determining a position of a GNSS-enabled mobile device, and a computer program product for performing such methods.

Background

Global Navigation Satellite Systems (GNSS) - comprising such systems as GPS (Global Positioning System), GLONASS (Global Navigation Satellite System), Galileo, etc. - are some of the most widely used systems for positioning and navigation across the globe. However, low-cost GNSS receivers (i.e. GNSS chips) included in mobile devices (e.g. smartphone, handheld navigation device, built-in or carried car navigation device, portable computer, wearable device, guidable drone, etc.) have several disadvantages:

- They are power-hungry and drain the battery quickly. Hence, for most location-based applications, it is not an option to be on all the time: users should manually enable/disable such applications on an as-needed base.
- Albeit GNSS is typically considered highly accurate, low-cost GNSS receivers do not exploit the full potential of the GNSS system in terms of accuracy. This inaccuracy is typically due to ineffective error correction. Satellite signals travelling from space to earth face atmospheric delays, more in particular ionospheric delays and tropospheric delays, that can be measured and corrected for by expensive (dual frequency) receivers, but typically not by low-cost single frequency GNSS receivers. Multipath effects (signals being reflected by buildings or other surfaces such that a signal appears to have travelled for a longer time and over a longer distance than it actually did) are typically also ignored by GNSS receivers. Other errors are typically also ineffectively corrected, such as satellite almanac errors (ephemeris data), clock drift, geometric dilution of precision, etc.

Known approaches that aim to improve power-efficiency and/or accuracy (e.g. Assisted GNSS, Differential GNSS, etc.) fall somewhat short of their aims, in that they leave many responsibilities to the mobile device, straining its resources.

Summary

An object of embodiments of the invention is to improve power consumption of mobile devices with low-cost GNSS receivers. Additional benefits of embodiments of the invention comprise improving accuracy for low-cost GNSS receivers, requiring less overhead and requiring fewer measurements, calculations and/or transmissions.

According to a first aspect of the invention there is provided a method for determining a position of a Global Navigation Satellite System (GNSS)-enabled mobile device connected to a GNSS-enabled station device via a cellular network connection. The method comprises the following steps performed at said GNSS-enabled station device: receiving from said mobile device via said cellular network connection a position calculation request including pseudorange information pertaining to a number of mobile device pseudoranges between said mobile device and a respective plurality of GNSS satellites; determining error correction information configured for correcting a position calculation error for a position calculated based on station device pseudoranges between said station device and at least said respective plurality of GNSS satellites; calculating a position of said mobile device based on said pseudorange information and on said error correction information; and sending said position of said mobile device to said mobile device via said cellular network connection.

In the context of the present specification, a pseudorange is the estimated 'distance' between a GNSS satellite and a GNSS receiver. It may be calculated by measuring the travel time of a signal code from satellite to receiver, multiplied by the speed of light. The pseudorange for a given code measurement can be defined as follows:

$$\text{pseudorange } (P) = c \, . \, (t_i - t_j)$$

with:

P     measured code
c     speed of light
$t_i$     signal reception time
$t_j$     signal transmission time

Given that the transmission time and the reception time are measured by different clocks which are not synchronised, it is impossible to measure the true range between the satellite and the receiver. Furthermore, other error sources like ionospheric delays add a bias to calculated pseudoranges. Thus, to determine an accurate location, we need to correct the pseudoranges (estimated ranges) for all the errors that were introduced such that we can better approximate the true ranges. This *inter alia* involves filtering out clock errors caused by inaccurate quartz oscillators, ionospheric and tropospheric errors caused by signal delays as well as multipath errors caused by reflections on buildings and the earth's surface.

Nevertheless, it will be understood by the skilled person that embodiments of the invention are in no way limited to the notion of pseudoranges as developed above, and may additionally or alternatively use other estimates based on measurements or indications of the distance between a GNSS satellite and a GNSS receiver, such as a carrier phase difference, a transmission time, or any other measure or indication that directly or indirectly represents said distance.

Information (i.e. pseudorange information) pertaining to a number of mobile device pseudoranges between said mobile device and a respective plurality of GNSS satellites may comprise actual pseudoranges, time differences, or other indications that allow to determine said mobile device pseudoranges. The skilled person will understand that the pseudorange information may further comprise one or more GNSS satellite identifications, one or more GNSS signal transmission timestamps and/or one or more GNSS signal reception timestamps. These allow a station device to determine the position of the corresponding respective GNSS satellite that sent the GNSS signal that was received by a GNSS receiver in a mobile device, for use in calculating the position of said mobile device.

Additionally, other information may be received, from Assisted GNSS sources, at said station device, in the form of assistive data configured to assist the GNSS receiver in said station device, for example to speed up finding a GNSS satellite fix, to improve GNSS receiver sensitivity, etc.; such as almanac data, ephemeris data, etc.

In the context of this specification, 'GNSS-enabled' will be taken to mean that a GNSS receiver or GNSS chip is included in a device, such that it can receive GNSS signals sent by GNSS satellites.

Embodiments are based *inter alia* on the inventive insight that offloading GNSS position calculations based on measurements made by the mobile device to the station device via the cellular network connection saves on energy requirements for the mobile device concerning position calculation, station lookup and connection management, and moreover helps to improve the accuracy of the calculated position.

More in particular, since an existing cellular network connection (e.g. a 3G/4G or WiFi connection or another cellular network technology) can be used for sending / receiving a position calculation request and for receiving / sending a position, there is no need for the mobile device to maintain a connection with a remote server offering offloading support. Also, the cellular nature of the network connection helps the mobile device to seamlessly hand over from one cell to another, assuming that the other cell comprises another GNSS-enabled station device embodiment according to the invention, which decreases the need for the mobile device to expend energy on looking up stations and collecting data.

Moreover, the station device can apply its own determined error correction to the pseudoranges received from the mobile device to improve the accuracy of the calculated position of the mobile device. Due to their geographic proximity, errors in determining the position are essentially equal for GNSS receivers in the same general area. For this reason, one GNSS receiver-equipped device can benefit from error correction information determined for another nearby GNSS receiver-equipped device.

In this manner, a GNSS receiver embedded in a GNSS-enabled device needs to obtain only less demanding pseudorange information pertaining to pseudoranges to GNSS satellites in view of the GNSS receiver. This pseudorange information is shared with the station device (e.g. a cell tower or a small cell) to which the mobile device is connected (e.g. via a 3G/4G or WiFi connection, as is well known to the person skilled in the art). Based on that pseudorange information the station device calculates a position. The skilled person will understand that errors of accuracy when calculating a position are inherent to using pseudorange information. Since the station device is aware of its own position to sufficient accuracy, preferably by accurate surveying beforehand, and can track ionospheric delays and other error sources, it can determine and apply corrections to calculations based on the pseudorange information received from the mobile device. Given that the range of a station device may be limited, these delay measurements will be (very nearly) as accurate as when carried out on the mobile device itself. By delegating the actual calculations to a station device, the accuracy and power consumption of mobile devices with a built-in inexpensive GNSS receiver can be improved; by providing communication via a cellular network connection, power consumption and overhead for the mobile device can further be improved.

In the context of the present specification, it will be clear to the skilled person that GNSS is a general term covering many currently developed and possibly still unforeseen technologies. In particular, GNSS may comprise such variants as GPS, GLONASS, Galileo, IRNSS (Indian Regional Navigational Satellite System), BDS (BeiDou and BeiDou-2 Navigation Satellite System), etc. The skilled person will also appreciate that mention of a concept or technique in relation to one specific GNSS variant (e.g. for reasons of brevity or history) should not be taken to limit that concept or technique to that specific GNSS variant only.

According to a preferred embodiment, said determining of said error correction information comprises: obtaining a number of station device pseudoranges between said station device and said respective plurality of GNSS satellites; calculating a position of said station device based on said station device pseudoranges; and determining an error correction difference between said calculated position of said station device and a pre-determined position of said station device.

In this manner, it is possible to provide error correction information including said error correction difference, which could allow a mobile station in the same general area as the station device to use said error correction information when calculating its own position and/or which could allow the station device to use said error correction information itself when calculating a position of said mobile device. The skilled person will appreciate that for the consideration of energy efficiency, the offloaded calculation is preferable.

According to a further developed embodiment, said pre-determined position of said station device has been pre-determined by surveying the position of said station device to substantial accuracy. In this manner, the error correction information can de determined using a very accurately known pre-determined position of the station device. Given that calculations of a position of the station device based on obtained station device pseudoranges may be inaccurate, this allows determining a difference between said calculations and said pre-determined position, and to find error correction information based thereon.

According to an embodiment, said pseudorange information pertains to at least three, preferably at least four mobile device pseudoranges between said mobile device and at least three, preferably at least four respective GNSS satellites; and wherein said station device pseudoranges comprise at least three, preferably at least four station device pseudoranges between said station device and at least said at least three, preferably four respective GNSS satellites.

Using three pseudoranges, it is possible to determine a general position in three-dimensional space, if one of the two intersections of spheres calculated using said pseudoranges can be discarded as nonsensical (or in the extreme case, if the three spheres only intersect in one single point). Using four pseudoranges, it is equally possible to determine said general position in three-dimensional space, but it is also possible to determine a clock drift error at a mobile device, given that the clocks of the GNSS satellites are correct and synchronised.

According to another aspect of the invention, there is provided a method for determining a position of a Global Navigation Satellite System (GNSS)-enabled mobile device connected to a GNSS-enabled station device via a cellular network connection. The method comprises the following steps performed at said mobile device: obtaining a number of mobile device pseudoranges between said mobile device and a respective plurality of GNSS satellites; sending to said station device via said cellular network connection a position calculation request including pseudorange information pertaining to said number of mobile device pseudoranges; and receiving from said station device via said cellular network connection a position of said mobile device.

In this manner, it is possible for a mobile device to determine its position in a very energy-efficient way, and/or using fewer communication resources.

According to a further developed embodiment, said method comprises: receiving assistive data configured to speed up finding a GNSS satellite fix; and said obtaining of said number of mobile device pseudoranges is performed using said assistive data. The skilled person will understand how to speed up finding said GNSS satellite fix, or in other words, how to decrease the time to first fix, using said assistive data.

In this manner, less energy has to be expended searching for GNSS satellite fixes.

According to another aspect of the invention, there is provided a Global Navigation Satellite System (GNSS)-enabled station device for determining a position of a GNSS-enabled mobile device connected to said station device via a cellular network connection, comprising: a cellular receiver configured for receiving from said mobile device via said cellular network connection a position calculation request including pseudorange information pertaining to a number of mobile device pseudoranges between said mobile device and a respective plurality of GNSS satellites; error detection means configured for determining error correction information configured for correcting a position calculation error for a position of said station device calculated based on station device pseudoranges between said station device and at least said respective plurality of GNSS satellites; position calculation means configured for calculating a position of said mobile device based on said pseudorange information and on said error correction information; and a cellular transmitter configured for sending said position of said mobile device to said mobile device via said cellular network connection.

The skilled person will understand that the hereinabove described technical considerations and advantages for method embodiments also apply to the device embodiments, *mutatis mutandis.*

According to an embodiment, the station device comprises: a GNSS receiver configured for obtaining at least one pseudorange between said station device and a corresponding number of GNSS satellites.

According to a further developed embodiment, the station device comprises: a storage memory configured for storing a pre-determined position of said station device; and said GNSS receiver is configured for obtaining a number of station device pseudoranges between said station device and at least said respective plurality of GNSS satellites; said position calculation means are configured for calculating a position of said station device based on said station device pseudoranges; and said error detection means are configured for determining said error correction information based on said pre-determined position of said station device.

According to yet another embodiment, said cellular receiver is configured for receiving from an Assisted GNSS source assistive data configured to speed up finding a GNSS satellite fix; and/or said cellular transmitter is configured for sending to said mobile device said assistive data configured to speed up finding a GNSS satellite fix.

According to another aspect of the invention,

there is provided a Global Navigation Satellite System (GNSS)-enabled mobile device for determining a position, said mobile device being connected to a GNSS-enabled station device via a cellular network connection. The mobile device comprising: a GNSS receiver configured for obtaining at least one mobile device pseudorange between said mobile device and a corresponding number of GNSS satellites; a cellular transmitter configured for sending to said station device via said cellular network connection a position calculation request including pseudorange information pertaining to said number of mobile device pseudoranges; and a cellular receiver configured for receiving from said station device via said cellular network connection a position of said mobile device. The skilled person will understand that said GNSS receiver may be configured for obtaining at least three, preferably at least four mobile device pseudoranges between said mobile device and at least three, preferably at least four respective GNSS satellites.

According to an embodiment, said cellular receiver is configured for receiving assistive data configured to speed up finding a GNSS satellite fix; and said GNSS receiver is configured for obtaining said number of mobile device pseudoranges is performed using said assistive data.

According to another aspect of the invention, there is provided a system for determining a position of a Global Navigation Satellite System (GNSS)-enabled mobile device as described above, comprising said mobile device and a GNSS-enabled station device as described above, wherein said mobile device is connected to said station device via a cellular network communication.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figure 1 illustrates schematically a set-up for a system embodiment according to the invention;
Figure 2 illustrates schematically a station device embodiment according to the invention;
Figure 3 illustrates schematically a mobile device embodiment according to the invention;
Figure 4 illustrates schematically a first method embodiment according to the invention; and
Figure 5 illustrates schematically a second method embodiment according to the invention.

Description of embodiments

Above, it was indicated that approaches such as Assisted GNSS and Differential GNSS, which aim to improve the power-efficiency and the accuracy of GNSS receivers, fall short of their aims, *inter alia* in that overhead requirements for mobile devices remain high.

Assisted GNSS (A-GNSS) combines GNSS with cellular networks. For instance, with A-GPS, information about navigation satellites (e.g. orbital data or almanac) is propagated to mobile devices over a cellular data connection. This information 'assists' mobile devices in obtaining a satellite fix more quickly, even in urban areas with limited GNSS signal reception. Moreover, whereas with Mobile-based A-GNSS the mobile device itself calculates its position, Mobile-assisted A-GNSS allows to delegate the actual position calculation to a (more powerful) server in the network. Delegating the calculation away from the mobile device helps save battery power (and improves sensitivity), but does not improve accuracy.

Differential GNSS (DGNSS), especially known as the more specific Differential GPS (DGPS), adds higher-accuracy position calculation, by taking into account local errors. By surveying the position of a station device (beforehand), which makes its position essentially accurately known, it is possible to determine the error that would occur when calculating the position of the station device based on measurements of one or more GNSS satellites, their signals and/or other environmental factors that can impact GNSS signal reception at the station device. This error is a more or less local error, in that it is essentially valid for (shared by) all GNSS receiver-equipped devices in the same general area as the station device. Examples of non-local errors are multipath errors and receiver errors, since these are determined by the receiver only. By calculating an error correction to counteract the local error and providing it to nearby mobile devices in that same general area, these mobile devices can take into account the error correction and can determine their own position with much greater accuracy.

Accurate satellite monitoring typically requires expensive GNSS receivers that need to be integrated with the station device. However, technologies have been developed that facilitate higher-accuracy satellite monitoring using low-cost (single-frequency) GNSS receivers (e.g. by determining ionospheric delays using the Galileo E5 signal). Nevertheless, the energy requirements for the mobile device remain high.

Known DGNSS implementations include Satellite-based Augmentation Systems (SBAS), such as Wide Area Augmentation System (WAAS, North America), European Geostationary Navigation Overlay Service (EGNOS, Europe and Asia), Multi-functional Satellite Augmentation System (MSAS, Japan), etc., as well as Ground-based Augmentation Systems (GBAS) (or Local Area Augmentation Systems (LAAS), which is typically used for planes performing precision approaches). Both SBAS and GBAS broadcast (via the GNSS satellites for SBAS or directly to end-users via a Very High Frequency Data Link for GBAS) correction messages to (partially) filter out these errors, but these correction messages are typically ignored by low-cost GNSS receivers. VHF Data Links transmission require special hardware, that is typically unavailable for low-cost mobile devices. However, in the case of DGPS, correction data is typically broadcasted using VHF signals (e.g. LAAS and many dedicated products in agriculture) and thus additional hardware is needed to receive such signals. Such hardware is typically not present in mobile devices, such as smartphones.

An exception to this are ground stations that expose their data over the Internet, e.g. using 'Networked Transport of RTCM via Internet Protocol' (NTRIP).

In order to provide DGNSS error correction while offloading position calculations away from the mobile device, one could implement the following steps:

1. A mobile device looks up a nearby DGNSS station device that publishes its data over the Internet.
2. The mobile device connects to the station device and continuously retrieves error correction information.
3. The mobile device determines pseudoranges to satellites within sight (and optionally corrects these itself using the error correction information retrieved in step 2).
4. The mobile device sends the pseudoranges (and optionally the error correction information retrieved in step 2) to an A-GNSS server that supports offloading the position calculations for the pseudoranges.

However, this means that it is the mobile device's responsibility to

(i) locate DGNSS station devices and switch to a near one when being on the move;
(ii) acquire correction data and apply corrections;
(iii) maintain a continuous connection with an A-GNSS server.

As can readily be appreciated, these responsibilities strain the mobile device and require a lot of energy.

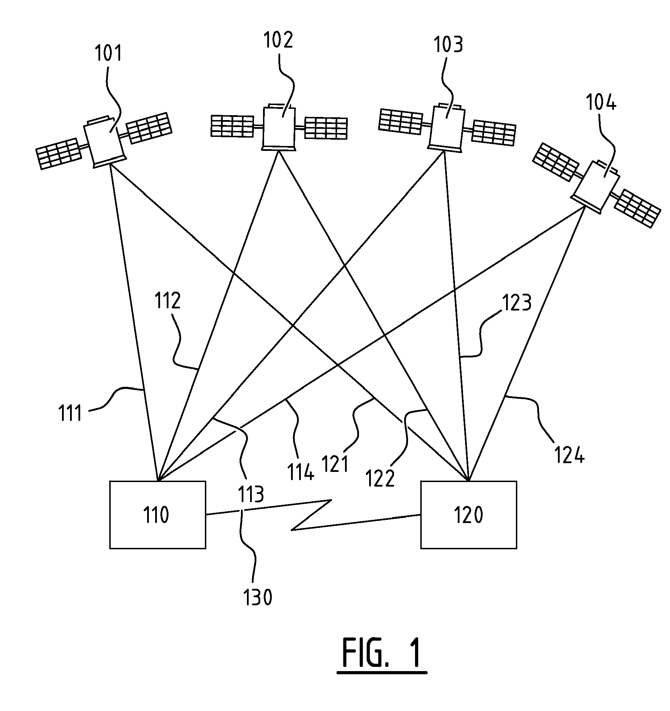

Figure 1 illustrates schematically a set-up for a system embodiment according to the invention. The system comprises a GNSS-enabled mobile device 110 (for example, a smartphone containing a built-in GNSS-receiver). The system further comprises a GNSS-enabled station device 120 (for example, a cell tower providing a cellular network connection service 130 to said mobile device). The figure shows a plurality of navigation satellites 101-104 that form part of a GNSS system. It will be appreciated that the number of navigation satellites shown is merely meant as an example. Moreover, it will be appreciated that the navigation satellites shown need not necessarily be of the same GNSS variant (GPS, Galileo, etc.): embodiments of the invention are indifferent as to which GNSS variant a given navigation satellite belongs to, if the navigation satellite can be used for a compatible GNSS receiver to obtain pseudoranges, i.e. measures representative of the distance, to said navigation satellite.

It will be understood that a GNSS receiver such as a GNSS receiver comprised by mobile device 110 or a GNSS receiver comprised by station device 120 can take measurements representative for the respective distances between the device and the satellite in a number of ways. In the present specification, it will also be understood that, in order to determine a position to at least some accuracy, obtaining pseudoranges from at least three satellites is necessary, since known distances from three satellites ideally define three intersecting spheres (i.e. two points in space) upon which the GNSS receiver at hand lies, of which two points one can typically be discarded as nonsensical (e.g. because it lies in space or within the earth, or it is moving at an impossible speed). In practice, due to delays and clock errors, these three spheres may not intersect at exactly the position of the GNSS receiver at hand. The skilled person will appreciate that using at least a fourth navigation satellite can be used to correct for clock errors at the receiver, since a fourth pseudorange gives a system of four equations that can be solved for four unknown variables, assuming that the navigation satellites keep the same time (e.g. with synchronised atomic clocks) and that their orbital data are well-known.

It will be understood by the skilled person that the station device 120 may serve multiple mobile devices (only one mobile device 110 is shown in the figure), and that a single mobile device 110 may hand over from one cell to another, to be served by another station device (not shown).

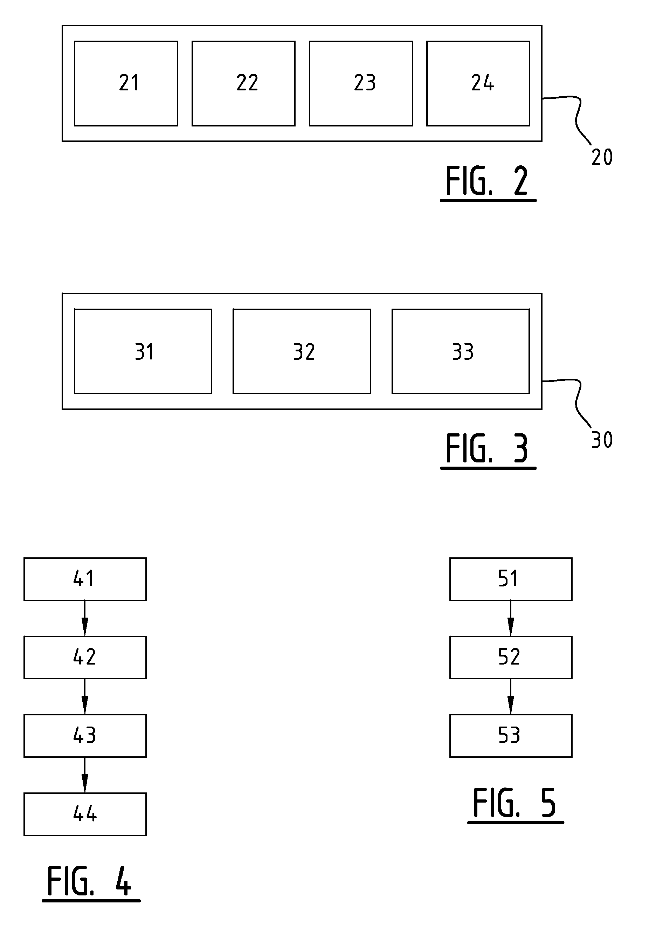

Figure 2 illustrates schematically a station device embodiment according to the invention. The GNSS-enabled station device 20 is suitable for determining a position of a GNSS-enabled mobile device (not shown) connected to said station device 20 via a cellular network connection provided by a cellular receiver 21 and a cellular transmitter 24, both comprised by the station device 20. It will be understood by the skilled person that any embodiments comprising a separate cellular transmitter 24 and cellular receiver 21 may also (instead or additionally) comprise a cellular transceiver combining the functionality of cellular transmitter 24 and cellular receiver 21.

The cellular receiver 21 is configured for receiving from said mobile device via said cellular network connection a position calculation request including pseudorange information pertaining to a number of mobile device pseudoranges between said mobile device and a respective plurality of GNSS satellites (not shown).

The station device 20 further comprises error detection means 22 configured for determining error correction information configured for correcting a position calculation error for a position calculated based on station device pseudoranges between said station device and at least said respective plurality of GNSS satellites.

The station device further 20 comprises position calculation means 23 configured for calculating a position of said mobile device based on said pseudorange information and on said error correction information.

The cellular transmitter 24 is configured for sending said position of said mobile device to said mobile device via said cellular network connection.

Figure 3 illustrates schematically a mobile device embodiment according to the invention. The GNSS-enabled mobile device 30 is suitable for determining a position of said mobile device 30. The mobile device 30 is connected to a GNSS-enabled station device (not shown) via a cellular network connection provided by a cellular transmitter 32 and a cellular receiver 33 both comprised by the station device 30. It will be understood by the skilled person that any embodiments comprising a separate cellular transmitter 32 and cellular receiver 33 may also (instead or additionally) comprise a cellular transceiver combining the functionality of cellular transmitter 32 and cellular receiver 33.

The mobile device 30 comprises a GNSS receiver 31 which is configured for obtaining at least one pseudorange between said mobile device and a corresponding number of GNSS satellites.

The cellular transmitter 32 is configured for sending to said station device via said cellular network connection a position calculation request including pseudorange information pertaining to said number of mobile device pseudoranges.

The cellular receiver 33 is configured for receiving from said station device via said cellular network connection a position of said mobile device.

Figure 4 illustrates schematically a first method embodiment according to the invention. The method is suitable for determining a position of a Global Navigation Satellite System (GNSS)-enabled mobile device connected to a GNSS-enable station device via a cellular network connection. To that end, the method comprises the following steps performed at said GNSS-enabled station device. Although for reasons of presentation the method steps are shown in the figure to have a certain order, it is to be understood that other embodiments may comprise steps having a different order.

A position calculation request is received 41 from said mobile device via said cellular network connection. The position calculation request includes pseudorange information pertaining to a number of mobile device pseudoranges between said mobile device and a respective plurality of GNSS satellites.

Error correction information is determined 42, that is configured for correcting a position calculation error for a position calculated based on station device pseudoranges between said station device and at least said respective plurality of GNSS satellites.

A position of said mobile device is calculated 43 based on said pseudorange information and on said error correction information.

Said position of said mobile device is sent 44 to said mobile device via said cellular network connection.

Figure 5 illustrates schematically a second method embodiment according to the invention. The method is suitable for determining a position of a Global Navigation Satellite System (GNSS)-enabled mobile device connected to a GNSS-enabled station device via a cellular network connection. To that end, the method comprises the following steps performed at said mobile device. Although for reasons of presentation the method steps are shown in the figure to have a certain order, it is to be understood that other embodiments may comprise steps having a different order.

A number of mobile device pseudoranges between said mobile device and a respective plurality of GNSS satellites is obtained 51. For example, a GNSS receiver comprised within said mobile device may perform sensing of said respective plurality of GNSS satellites in order to obtain 51 said number of mobile device pseudoranges, which are representative for the respective distances between said mobile device and the satellites of said respective plurality of GNSS satellites.

A position calculation request is sent 52 to said station device via said cellular network connection, said position calculation request including pseudorange information pertaining to said number of mobile device pseudoranges.

A position of said mobile device is received 53 from said station device via said cellular network connection.

In a further developed embodiment, the satellite monitoring data collected by station devices such as small cells may be shared with a GNSS operator. These data may be valuable to improve the GNSS operator's ionospheric models, etc., which are typically constructed with only a limited set of dedicated ground stations.

In yet another further developed embodiment, the user might opt in to a 'tracking policy', allowing the cell operator to keep a limited history of calculated positions.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A method for determining a position of a Global Navigation Satellite System (GNSS)-enabled mobile device connected to a GNSS-enable station device via a cellular network connection, said method comprising the following steps performed at said GNSS-enabled station device:

    - receiving from said mobile device via said cellular network connection a position calculation request including pseudorange information pertaining to a number of mobile device pseudoranges between said mobile device and a respective plurality of GNSS satellites;
    - determining error correction information configured for correcting a position calculation error for a position calculated based on station device pseudoranges between said station device and at least said respective plurality of GNSS satellites;
    - calculating a position of said mobile device based on said pseudorange information and on said error correction information; and
    - sending said position of said mobile device to said mobile device via said cellular network connection.

2. The method of claim 1, wherein said determining of said error correction information comprises:

    - obtaining a number of station device pseudoranges between said station device and said respective plurality of GNSS satellites;
    - calculating a position of said station device based on said station device pseudoranges; and
    - determining an error correction difference between said calculated position of said station device and a pre-determined position of said station device.

3. The method of claim 2, wherein said pre-determined position of said station device has been pre-determined by surveying the position of said station device to substantial accuracy.

4. The method of any one of the previous claims, wherein said pseudorange information pertains to at least three, preferably at least four mobile device pseudoranges between said mobile device and at least three, preferably at least four respective GNSS satellites; and wherein said station device pseudoranges comprise at least three, preferably at least four station device pseudoranges between said station device and at least said at least three, preferably four respective GNSS satellites.

6. A method for determining a position of a Global Navigation Satellite System (GNSS)-enabled mobile device connected to a GNSS-enabled station device via a cellular network connection, said method comprising the following steps performed at said mobile device:

- obtaining a number of mobile device pseudoranges between said mobile device and a respective plurality of GNSS satellites;
- sending to said station device via said cellular network connection a position calculation request including pseudorange information pertaining to said number of mobile device pseudoranges; and
- receiving from said station device via said cellular network connection a position of said mobile device.

7. The method of claim 6, comprising at said mobile device:

- receiving assistive data configured to speed up finding a GNSS satellite fix; and

wherein said obtaining of said number of mobile device pseudoranges is performed using said assistive data.

8. A Global Navigation Satellite System (GNSS)-enabled station device for determining a position of a GNSS-enabled mobile device connected to said station device via a cellular network connection, comprising:

- a cellular receiver configured for receiving from said mobile device via said cellular network connection a position calculation request including pseudorange information pertaining to a number of mobile device pseudoranges between said mobile device and a respective plurality of GNSS satellites;
- error detection means configured for determining error correction information configured for correcting a position calculation error for a position of said station device calculated based on station device pseudoranges between said station device and at least said respective plurality of GNSS satellites;
- position calculation means configured for calculating a position of said mobile device based on said pseudorange information and on said error correction information; and
- a cellular transmitter configured for sending said position of said mobile device to said mobile device via said cellular network connection.

9. The station device of claim 8, comprising:

- a GNSS receiver configured for obtaining at least one pseudorange between said station device and a corresponding number of GNSS satellites.

10. The station device of claim 8 or 9, comprising:

- a storage memory configured for storing a predetermined position of said station device; and wherein:
- said GNSS receiver is configured for obtaining a number of station device pseudoranges between said station device and at least said respective plurality of GNSS satellites;
- said position calculation means are configured for calculating a position of said station device based on said station device pseudoranges; and
- said error detection means are configured for determining said error correction information based on said pre-determined position of said station device.

11. The station device of any one of the claims 8-10, wherein:

- said cellular receiver is configured for receiving from an Assisted GNSS source assistive data configured to speed up finding a GNSS satellite fix; and/or
- said cellular transmitter is configured for sending to said mobile device said assistive data configured to speed up finding a GNSS satellite fix.

12. A Global Navigation Satellite System (GNSS)-enabled mobile device for determining a position, said mobile device being connected to a GNSS-enabled station device via a cellular network connection, said mobile device comprising:

- a GNSS receiver configured for obtaining at least one mobile device pseudorange between said mobile device and a corresponding number of GNSS satellites;
- a cellular transmitter configured for sending to said station device via said cellular network connection a position calculation request including pseudorange information pertaining to said number of mobile device pseudoranges; and
- a cellular receiver configured for receiving from said station device via said cellular network connection a position of said mobile device.

13. The mobile device of claim 12, wherein:

- said cellular receiver is configured for receiving assistive data configured to speed up finding a GNSS satellite fix; and
- said GNSS receiver is configured for obtaining said number of mobile device pseudoranges using said assistive data.

**14.** A system for determining a position of a Global Navigation Satellite System (GNSS)-enabled mobile device according to any one of the claims 12-13, comprising said mobile device and a GNSS-enable station device according to any one of the claims 8-11, wherein said mobile device is connected to said station device via a cellular network communication.

**15.** A computer program comprising computer-executable instructions for performing the method of any one of the claims 1-7, when the program is run on a computer.

FIG. 1

| 21 | 22 | 23 | 24 |

FIG. 2

20

| 31 | 32 | 33 |

FIG. 3

30

41

42

43

44

FIG. 4

51

52

53

FIG. 5

**EP 2 963 437 A1**

## EUROPEAN SEARCH REPORT

Application Number

EP 14 30 6044

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 275 832 A2 (SNAPTRACK INC [US]) 19 January 2011 (2011-01-19) * paragraphs [0010] - [0015] * * paragraphs [0018], [0027], [0028], [0032], [0035] * * paragraphs [0047] - [0049] * * paragraphs [0052], [0053] * | 1-15 | INV. G01S5/00 G01S19/09 ADD. G01S19/34 |
| X | US 5 884 214 A (KRASNER NORMAN F [US]) 16 March 1999 (1999-03-16) * column 2, line 46 - column 3, line 44 * * column 5, line 44 - column 6, line 11 * * column 6, line 59 - column 7, line 10 * * column 8, lines 34-49 * | 1-15 | |
| X | US 2004/171391 A1 (MURAMATSU TOSHIHIKO [JP]) 2 September 2004 (2004-09-02) * paragraphs [0087], [0095] * | 6,12 | |
| A | US 2002/080064 A1 (KIM HYONG-WON [KR]) 27 June 2002 (2002-06-27) * the whole document * | 1-15 | TECHNICAL FIELDS SEARCHED (IPC) G01S |
| A | US 2001/035840 A1 (FENTON PATRICK C [CA] ET AL) 1 November 2001 (2001-11-01) * the whole document * | 1-15 | |
| A | US 2011/169691 A1 (THOMSON MARTIN WYVILLE [AU] ET AL) 14 July 2011 (2011-07-14) * the whole document * | 1-15 | |

The present search report has been drawn up for all claims

| Place of search | Date of completion of the search | Examiner |
|---|---|---|
| The Hague | 9 December 2014 | Naddeo, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6044

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2014

| Patent document cited in search report | | Publication date | Patent family member(s) | | | Publication date |
|---|---|---|---|---|---|---|
| EP 2275832 | A2 | 19-01-2011 | AU | 5587698 | A | 29-06-1998 |
| | | | EP | 0950194 | A2 | 20-10-1999 |
| | | | EP | 2169848 | A1 | 31-03-2010 |
| | | | EP | 2275832 | A2 | 19-01-2011 |
| | | | ES | 2336979 | T3 | 19-04-2010 |
| | | | HK | 1024530 | A1 | 17-09-2010 |
| | | | JP | 2001505309 | A | 17-04-2001 |
| | | | US | 6208290 | B1 | 27-03-2001 |
| | | | US | 2001028321 | A1 | 11-10-2001 |
| | | | WO | 9825157 | A2 | 11-06-1998 |
| US 5884214 | A | 16-03-1999 | US | 5884214 | A | 16-03-1999 |
| | | | US | 6272430 | B1 | 07-08-2001 |
| | | | US | 2002044087 | A1 | 18-04-2002 |
| | | | US | 2003139879 | A1 | 24-07-2003 |
| US 2004171391 | A1 | 02-09-2004 | JP | 2004251694 | A | 09-09-2004 |
| | | | US | 2004171391 | A1 | 02-09-2004 |
| US 2002080064 | A1 | 27-06-2002 | KR | 20020052438 | A | 04-07-2002 |
| | | | US | RE43356 | E1 | 08-05-2012 |
| | | | US | 2002080064 | A1 | 27-06-2002 |
| | | | US | 2003193432 | A1 | 16-10-2003 |
| US 2001035840 | A1 | 01-11-2001 | AT | 272222 | T | 15-08-2004 |
| | | | AU | 5809401 | A | 20-11-2001 |
| | | | CA | 2405054 | A1 | 15-11-2001 |
| | | | DE | 60104548 | D1 | 02-09-2004 |
| | | | DE | 60104548 | T2 | 15-09-2005 |
| | | | EP | 1290468 | A2 | 12-03-2003 |
| | | | US | 2001035840 | A1 | 01-11-2001 |
| | | | WO | 0186317 | A2 | 15-11-2001 |
| US 2011169691 | A1 | 14-07-2011 | NONE | | | |

EPO FORM P0459

For more details about this annex : see Official Journal of the European Patent Office, No. 12/82